(19) Europäisches Patentamt
European Patent Office
Office européen des brevets

(11) **EP 2 618 274 A1**

(12) **EUROPEAN PATENT APPLICATION**

(43) Date of publication:
**24.07.2013 Bulletin 2013/30**

(51) Int Cl.:
**G06F 17/30** *(2006.01)*

(21) Application number: **12151626.4**

(22) Date of filing: **18.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Ribiere, Myriam**
**91620 Nozay (FR)**

• **Picault, Jérôme**
**91620 Nozay (FR)**
• **Hebbar, Abdelkrim**
**91620 Nozay (FR)**

(74) Representative: **Lebkiri, Alexandre**
**Cabinet Camus Lebkiri**
**87 Rue Taitbout**
**75009 Paris (FR)**

(54) **Method for providing a set of services of a first subset of a social network to a user of a second subset of said social network**

(57)    The present invention relates to a method (M) for providing by means of a system a set of services (S) of a first subset (Sub1) of a social network (Sntw) to a user terminal (T) which has access to a second subset (Sub2) of said social network (Sntw), said method comprising :
- constructing by the system a graph based on the measure of the similarities between the social interactions of each pair of subsets (Sub), said construction comprising :
- creating of a node for each subset (Sub) of the social network (Sntw) ;
- extracting of specific data (Sd) associated to the social interactions within each subset (Sub) ;
- measuring the similarities between said specific data (Sd) for each pair of subsets (Sub) ;
- according to said measures, creating an edge (E) within the graph with an associated weight (W) for each pair of subsets (Sub);

- providing by said system to said user terminal (T), a set of services (S) of the first subset (Sub1) to the second subset (Sub2), said set of services (S) being chosen according to the weight (W) of the edge (E) corresponding to said first subset (Sub1) and said second subset (Sub2).

FIG. 3

EP 2 618 274 A1

**Description**

TECHNICAL FIELD

The present invention relates to a method for providing by means of a system a set of services of a first subset of a social network to a user terminal.
It also related to a corresponding system for carrying out said method.
Such a method may be used in any social network sites, applications or services using social networks.

BACKGROUND OF THE INVENTION

The application US 7853881 discloses a method enabling a member of a community (also called subset) of a social network to communicate and exchange information with a user of another community of said social network. The method chooses other online users on the basis of a degree of separation computed from the profile of the users and the content of the pages they are accessing (content is text, graphics, audio, video delivered to the online user through a website). The profile of a user may be dynamically generated and updated based on level and type of activity that the member gets involved in, and based on the interactions with others and the level. A measurement of the similarity or of "interest-based relationships" distance between users is performed based on said degree of separation. This measure can be used by a member to determine who to interact with. In particular, a shorter "interest-based relationships" distance between two users indicates a possibly richer and positive interaction between those two members of different social networks. Relationships are established based on common activity and content.
One problem of said prior art is that to benefit from the communication exchange service between a user Ui of a community i and other user Uj of other communities j, the method has to gather all information on the user profile of all the users in all the communities j and has to compute similarities between the user i and all these users j. Therefore this method is time and memory consuming and does not preserve user privacy. Furthermore, the exchange service proposed for a given time is never invalidated by the system, even if the user profile of the person changes over time.

SUMMARY OF THE INVENTION

It is an object of the invention to provide a method for providing by means of a system a set of services of a first subset of a social network to a user terminal which has access to a second subset of said social network.
To this end, there is provided a method for providing by means of a system a set of services of a first subset of a social network to a user terminal which has access to a second subset of said social network, said method comprising:

- constructing by the system a graph based on the measure of the similarities between the social interactions of each pair of subsets, said construction comprising :

  - creating of a node for each subset of the social network ;
  - extracting of specific data associated to the social interactions within each subset ;
  - measuring the similarities between said specific data for each pair of subsets ;
  - according to said measures, creating an edge within the graph with an associated weight for each pair of subsets;

- providing by said system to said user terminal, a set of services of the first subset to the second subset, said set of services being chosen according to the weight of the edge corresponding to said first subset and said second subset.

As we will see in further details, the method provides services of a subset to the whole members of another subset based on activities performed within a subset. There is no need any more to compute similarity between a user and each other user of other subsets.
In a first non-limitative embodiment,

- the specific data is a keyword or an entity ;
- the specific data is the most relevant matching semantic entity found in a linked data graph from on a keyword or from an entity associated to the social interactions of a subset.

In a second non-limitative embodiment, the construction of the graph is performed periodically according to the update of the social interactions.
In a third non-limitative embodiment, the construction of the graph further comprises for each subset:

- from the subset description, finding the corresponding specific data ;
- measuring the similarities between said specific data for each pair of subsets ;
- according to said measure, update the weight of the edge within the graph associated to each pair of subsets.

In a fourth non-limitative embodiment, the provision of said set of services is further filtered by a user profile and/or a user parameters set by a user of said user terminal which has access to the first and the second subsets.

In a fifth non-limitative embodiment, the provision of a set of services comprises a sub-step of comparing the weight of the edge corresponding to said first subset and said second subset with a threshold level associated to each service of the first subset.

In addition, there is provided a system for providing a set of services of a first subset of a social network to a user terminal which has access to a second subset of said social network, said system comprising:

- a graph generator for constructing a graph based on the measure of the similarities between the social interactions of each pair of subsets, said construction comprising :

  - creating of a node for each subset of the social network ;
  - extracting of specific data associated to the social interactions within each subset ;
  - measuring the similarities between said specific data for each pair of subsets ;
  - according to said measures, creating an edge within the graph with an associated weight for each pair of subsets;

- a service access manager for providing to said user terminal, a set of services of the first subset to the second subset, said set of services being chosen according to the weight of the edge corresponding to said first subset and said second subset.

In a first non-limitative embodiment, the graph generator is further adapted to:

- from the subset description, finding the corresponding semantic entities ;
- measuring the similarities between said semantic entities of each pair of subsets ;
- according to said measure, update the weight of the edge within the graph associated to each pair of subsets.

In addition, there is provided a computer program product, comprising a set of instructions, which when loaded into said computer, causes the computer to carry out the method for providing a set of services, according to any one of the previous characteristic.

BRIEF DESCRIPTION OF THE FIGURES

Some embodiments of methods and/or apparatus in accordance with embodiments of the present invention are now described, by way of example only, and with reference to the accompanying drawings, in which:

- Fig. 1 illustrates schematically a social network with subsets used by the method for providing a set of services according to the invention;
- Fig. 2 illustrates schematically a non-limitative embodiment of a system which carries out the method for providing a set of services according to the invention;
- Fig. 3 illustrates a schematic organization chart of the method for providing a set of services according to the invention;
- Fig. 4 illustrates a graph of subsets created by the method of Fig. 3; and
- Fig. 5 illustrates the different modules of the system of Fig. 2 which carries out different steps of the method of Fig. 3.

DESCRIPTION OF EMBODIMENTS OF THE INVENTION

In the following description, well-known functions or constructions by the man skilled in the art are not described in detail since they would obscure the invention in unnecessary detail.

As will be described hereinafter, the method for providing by means of a system a set of services of a first subset of a social network to a user terminal which has access to a second subset of said social network comprises two main steps :1) construction of a dynamic graph of subsets, based on the analysis of similarities between these subsets based on at least one factor: social interactions (annotations, comments, conversations) between members of the subset, and optionally a description of the subset; and 2) the exploitation of this graph to access in a flexible way services of another subset based on the strength of the links between the two subsets.

It is to be noted that a subset Sub of social network is a medium which allows people to engage in interactions and exchange information on a specific topic, centered around a well-defined physical or multimedia object (e.g. a forum about soccer (virtual world) or a discussion in a train station about the delay of the TGV (physical world) ) etc. Such a subset is composed generally from people from different social spheres (friends, family, coworkers and strangers). Each member of a subset may be represented in virtual worlds by their user profile, i.e. a set of attributes that represent their identity and interests or a business card or a badge etc. in the physical world. It is to be noted that user profile attributes comprise in non-limitative examples declared civil status, centers of interest, photography, audio, video or any other multimedia content attached to the user full profile information.

By social network Sntw, one means members online connected by friendly or professional links grouped or not by sector, which promotes social interaction, creation and information sharing. In a non-limitative example, a social network may be Facebook®

A subset Sub is defined by interactions of a group of members of said social network about a specific object. In a non-limitative example, a subset may be a Facebook® page about an actor.

It is to be noted that a subset Sub is also called community within a social network. Therefore, in the following, the term subset or community will be used interchangeably.

By social interactions I, one means any sort of activity conveying meaningful information between two or more people within a subset Sub, such as an answer to a question in a forum, conversation, or either annotations, comments of the social object from one person.

Each subset $Sub_i$ is represented by:

- the social object that constitutes the center of interactions within the subset;
- the set of people which interact within said subset;
- the set of interactions that occur in the subset.

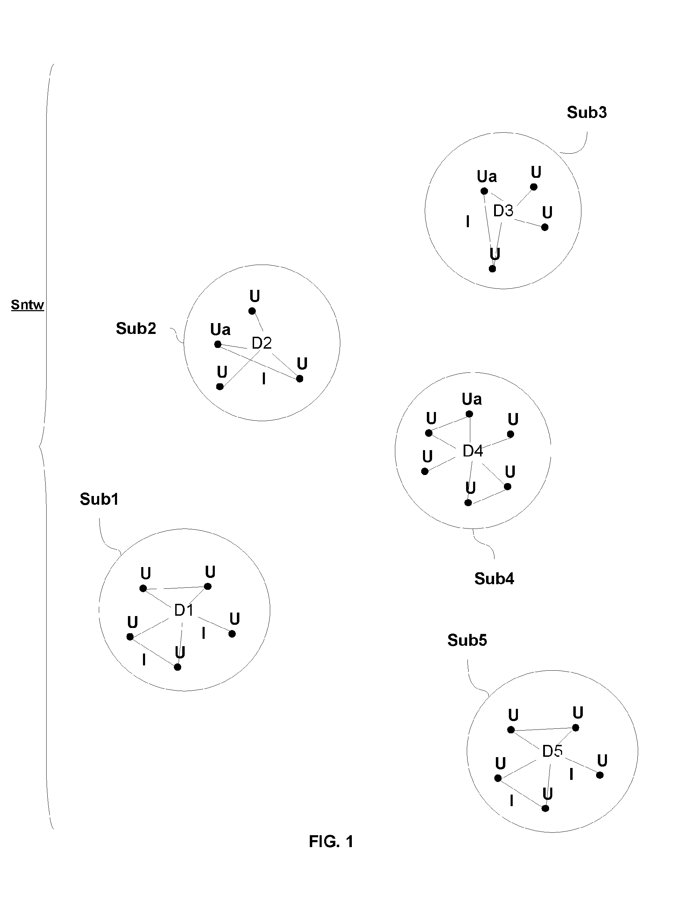

An example of social network Sntw is illustrated in Fig. 1a. It comprises five subsets Sub1 to Sub5.

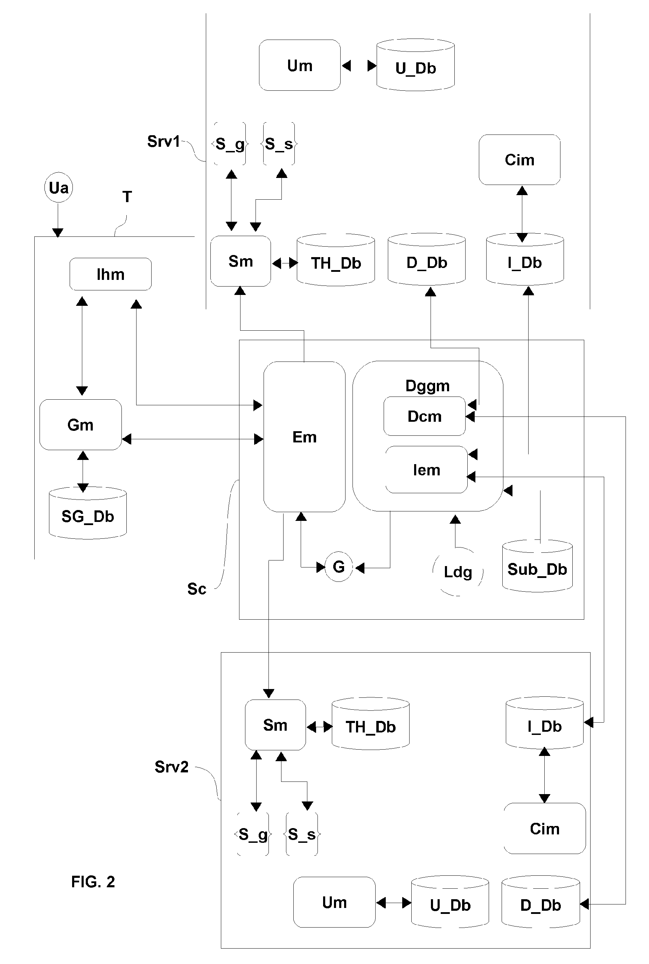

The method M is carried out by a system Sys, said system Sys being illustrated in Fig. 2.

Said system Sys comprises:

- a graph generator Dggm for constructing a graph G based on the measure of the similarities between the social interactions I of each pair of subsets Sub within said social network Sntw ;
- a service access manager Sm for providing to said user terminal T, a set of services S of the first subset Sub1 to the second subset Sub2, said set of services S being chosen according to a weight W of an edge E corresponding to said first subset Sub1 and said second subset Sub2.

The system Sys further comprises:

- a user manager Um which is in charge of managing people who are part of the community. It is connected to a user database U_Db, which contains various information about users, such as at least an identifier, and optionally some additional profile information.
- a community interaction manager Cim which is in charge of handling the different kind of interactions (annotations, comments, conversations etc.) that occur in a subset Sub. These interactions are organized and stored into a social interactions database I_Db (typical data include at least: an identifier of the interaction, an author, the text of the interaction, a timestamp).

A community provides a set of services to its members. Community services can be divided into two categories:

- generic community services S_g (i.e. services that exist potentially for all communities, regardless of the social object they are centered on). A non-exhaustive list may comprise for example communication and information services such as:

  - community discovery services: i.e. services that make the user aware of the existence of the new community ;
  - awareness services: e.g. services that follow people (i.e. provide the user with new interactions that involve certain people), follow topic of the new community (i.e. provide to the user new interactions related to a certain topic) ;
  - community activities services: e.g. services that permit having access to a summary of the social activities within the community (e.g. a display of last social activities as a tag cloud, which allows the user a quick overview of what happened in that community) ;
  - participatory services: i.e. services that involve actively the user, e.g. give information, give an opinion, provide feedback, exchange ideas, etc.

- community-specific services S_s (i.e. services that depend on the kind of the social object of the subset): e.g. registration to community-specific events (organization of a travel) or access to the "heatmap" in a social electronic book, which represents the passages in the book with the most interactions.

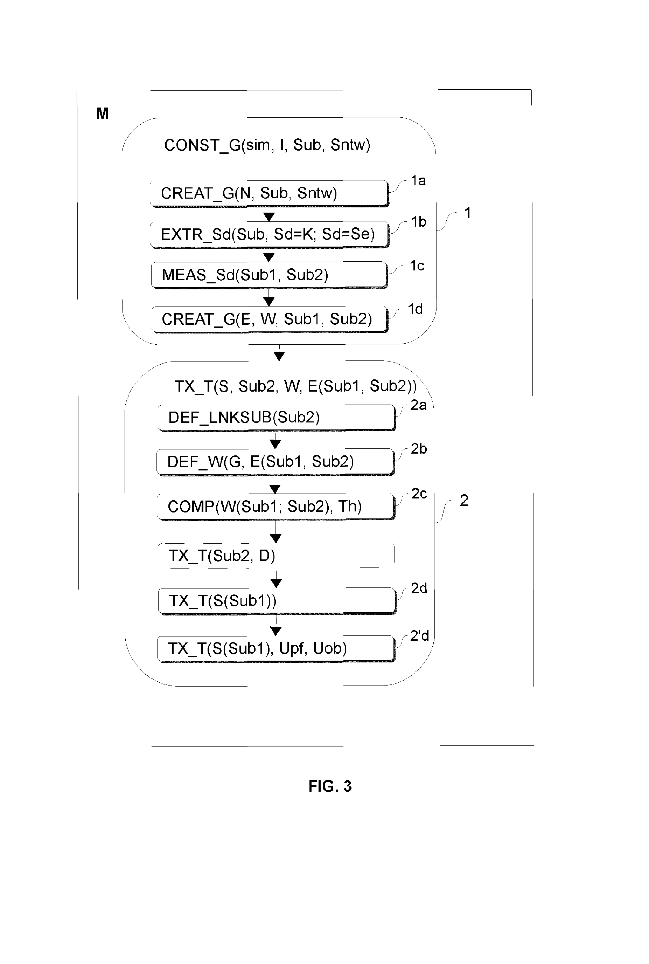

The method M for providing by means of a system Sys a set of services S of a first subset Sub1 of a social network Sntw to a user terminal T which has access to a second subset Sub2 of said social network Sntw, is described in detail in a non-limitative embodiment as illustrated in Fig. 3.

Said method comprises:

- constructing by the system Sys a graph G based on the measure of the similarities between the social interactions I of each pair of subsets Sub, said construction comprising (step illustrated CONSTR_G):

  - creating of a node N for each subset Sub of the social network Sntw ;
  - extracting of specific data Sd associated to the social interactions I within each subset Sub (sub-step illustrated EXTR_Sd(Sub, Sd=K; Sd=Se));
  - measuring the similarities between said specific data Sd for each pair of subsets (sub-step illustrated MEAS_Sd(Sub1, Sub2));
  - according to said measures, creating an edge E within the graph G with an associated weigh W for each pair of subsets Sub (sub-step illustrated CREAT_G(E, W, Sub1, Sub2));

- providing by said system Sys to said user terminal T, a set of services S of the first subset Sub1 to the second subset Sub2, said set of services S being chosen according to the weigh W of the edge E corresponding to said first subset Sub1 and said second subset Sub2 (step illustrated TX_T(S, Sub2, W, E(Sub1, Sub2)).

In the following description, two subsets Sub1, Sub2 within a social network are taken as non-limitative examples.

The first subset Sub1 is a community of the book "The Fellowship of the Ring", the first book of the famous trilogy The Lord of the Rings. Said subset will also be called subset-Book.

The embedded services may be:

- activity summary following service
- questions and answers specialized in Tolkien Universe service
- event (Trip, Conference, visit, movie) booking service
- sharing service (for example, share some private images, texts etc.
- meet the people service (to meet people physically)
- subset discovery service

The second subset Sub2 is a community of an online game based on the world described by the book the Lord of the Rings such as for example a community around the real-time strategy game The Lord of the Rings: War of the Ring. Said subset will also be called subset-Game.

The method M is described in details below with reference to all the figures.

**In a first st**ep **1)** illustrated CONST_G(sim, I, Sub, Sntw), the system Sys constructs a graph G based on the measure of the similarities Sim between the social interactions I of each pair of subsets Sub.

The graph G is dynamically constructed and updated as described hereafter. This graph connects together a set of subsets Sub. Thus, the dynamic graph of subsets G is an undirected graph G=<N, Et> where:

- N denotes all the nodes within the graph. Each node of the graph is itself a subset Sub.
- Et denotes the edges E connecting those nodes N at time t. These edges are associated to a weight W which represents the "proximity" link between two subsets Subi and Subj. The strength of this link is periodically computed. As the graph is dynamic, these edges (and their associated weight) may change over time.

This step is performed by the graph generator Dggm.

This module is in charge of generating the dynamic graph of subsets G described above and of updating it regularly. In order to create the graph (or update it), this module accesses a repository Sub_Db (a kind of "white pages") where the subsets are registered, which gives an access point to them.

Based on the list of retrieved subsets, the module generates a graph by:

- creating a node N associated to each subset Sub ;
- creating for each pair of subset (Subi, Subj) an edge E and computing, at a specific point in time t, an associated weight W(Subi, Subj). Said step is detailed in the sub-step 1c).

The weight intensity denotes the degree of proximity between those two subsets Sub. This module creates pertinent links between objects and their subsets by creating paths computed from the similarities of interactions between communities, and in a non-limitative embodiment from the similarities of description between the communities.

Hence, this step comprises the following sub-steps.

**In a first sub-step 1a)**, a node N is created for each subset of the social network Sntw (illustrated CREAT_G (N, Sub, Sntw) in Fig. 3). The repository Sub_Db where the subsets are registered is used.

**In a second sub-step 1b)**, specific data Sd associated to the social interactions I within each subset Sub are extracted (sub-step illustrated EXTR_Sd(Sub, Sd=K ; Sd=Se) in Fig. 3).

One or a plurality of specific data may be extracted.

A subset Sub is composed of interactions between users. An interaction is generally composed of entities (which are the proper nouns) and keywords (which represent the context of said entities) or other linguistic articulations, such as smileys.

Extraction of entities e and keywords K of an interaction are well-known by the man skilled in the art and won't be described here. To do so, the grammatical category of each term in an interaction I is identified using part-of-speech tagging (e.g. noun, verb) and stop words removed. Named entities are identified as terms starting with an upper-case letter or combinations of said terms. Most frequent terms that occur in the said subset Sub of the said social network are considered the specific data.

Hence, social interactions I of the two subsets Sub1 and Sub2 take as non-limitative examples are the following. For the first subset Sub1, the book users are discussing a hot topic specifically on the genesis of the creatures appearing in the book.

For the second subset Sub2, the game users reach the level of the game where the ongoing quest leads them to cross the famous "Mines of Moria ». But to successfully cross the Mines, they have to kill a powerful evil creature: a "Balrog". Users have to find a mean for that, which generates a lot of discussions.

In a first non-limitative embodiment, the specific data Sd is a keyword K or an entity e.

For example, for the first subset Sub1 sub-Book, if an interaction I comprises the sentence "The black knights Nazgûl are terrifying", a named entity will be "Nazgûl" and the associated keywords will be "knights".

Therefore, a first specific data Sd will be for example: "Nazgûl" and/or "knights".

For example, for the second subset Sub2 sub-Game, if an interaction I comprises the sentence: "How do we kill the evil creature "Balrog", a named entity will be "Balrog" and the associated keywords will be "evil creature". Therefore, a first specific data Sd will be for example: "Balrog" and/or "evil creature".

In another second non-limitative embodiment, the specific data Sd is the most relevant matching semantic entity Se found in a linked data graph Ldg from on a keyword K or from an entity e associated to the social interactions I of a subset Sub.

In a non-limitative embodiment, a specific data Sd is set up in the form of an URI "Uniform Resource Identifier". Said URI will be used to perform a query in a linked data graph Ldg. It is to be noted that there will be as many queries as named entities and/or keywords found. Hence, it is to be noted that for each specific data Sd found in the previous step, this matching step is performed.

It is to be noted that a linked data graph Ldg comprises links between different concepts (semantic entities), a semantic entity linked with another being more general than the other semantic entity. Therefore, a linked data graph Ldg comprises different concepts from the specialized concepts to generalized concepts.

Linked Data appeared as a need to have a structured dataset representing concepts and connections between said concepts from the world and different domains. Nowadays, more and more data is available on the Web. Such data can include information about organizations, governments, public people and from many other fields. More and more individuals and public/private organizations contribute to this deluge by choosing to share their data with others. On the other hand, third parties consume this data to build new business opportunities and enhance recommendation strategies, such as online marketing and user re-targeting. Clearly, the presence of structured data is required so that they can be most easily reused. The structured published data are called linked data or web semantic.

The following principles govern linked data:

- the use of URIs as names for things ;
- the use of HTTP URIs so that these names can be accessible for people ;
- the use of standardized access and data representations (RDF "resource description framework", SPARQL protocol "Protocol and RDF Query Language). The RDF language able to storage data. It is to be noted that SPARQL is an RDF query language for request data on a database of the RDF type. It is adapted to the specific RDF graphs.

SPARQL can express interrogative or constructive queries:

- an interrogative query type SELECT, can extract from the RDF graph, a sub-graph representing a set of resources verifying conditions defined in a clause WHERE. For example, a SELECT query for finding the mother and father or the grand-parents of a person can be applied on a RDF graph comprising genealogy information ;
- a constructive query type CONSTRUCT provides a new graph which completes the questioned graph. CONSTRUCT queries can be applied on said RDF graph to add the relation brother-sister, cousin-cousin, uncle-nephew etc. which are not explicitly declared in the original graph. and finally ;
- the inclusion of links to other URIs for efficient data discovery. Such RDF links pointing to external data sources allows the linked data graph to be interconnected.

In a non-limitative embodiment, said linked data graph Ldg is based on DBPedia™ which is the most complete dataset in the frame of linked data with more than 4 million concepts (semantic entities) and relations between them. Therefore it has a very large topic-coverage and serves as a hub in linked data, as almost every item in other datasets are assigned an external link to DBPedia™. It is the biggest ontology today.

Hence, in a non-limitative embodiment, the URI http://dbpedia.org/page/Lord of the Rings may be used.

In a non-limitative example, the linked data graph Ldg may contain the semantic entities "Dark Riders, monster, War of the Ring, Lord of the Ring"

Therefore, for the first subset Sub1 based on the book, the semantic entity Se equal to "Dark Riders" which is the most relevant matching semantic entity of the first specific data Sd mentioned before "knights" when said keyword is retained as a specific data Sd.

In a non-limitative example, the linked data graph Ldg may also contain the semantic entities "Balrog, Maiar, Mines of Moria, monsters, Lord of the Ring".

Therefore, for the second subset Sub2 based on the game, the semantic entity Se equal to "monsters" which is the most relevant matching semantic entity of the first specific data Sd mentioned before "evil creature" when said keyword is retained as a specific data Sd.

When a plurality of specific data Sd are extracted, corresponding plurality of most relevant matching semantic entity Se are found, knowing that some specific data Sd may lead to the same corresponding most relevant semantic entity Se. Therefore, for a subset Sub, a vector of semantic entity $V_{Sd} = \{C1, ...Ci, ...Cn\}$ will be found.

It is to be noted that a subset description D, is associated to each subset. It is mainly based on a static description of the social object on which the subset is centered on. The description of the community is preferably represented by a vector of semantic concepts Ci also called semantic entities. $V_D = (C1, ...Cj, ...Cm\}$.

A semantic entity Se refers to a description through ontologies and/or taxonomies. It can for example be referenced by an URI, such as: http://dbpedia.org/page/Lord of the Rings as mentioned before.

Therefore, in a non-limitative embodiment, for each subset Sub, from the subset description D, some corresponding specific data Sd are also found, and more particularly a vector $V_{Sd}$ of specific data Sd.

It is to be noted that a vector $V_D$ or $V_{Sd}$ may have one or a plurality of specific data Sd.

This second sub-step 1b) is of course applied for all other subsets of the social network Sntw.

**In a third sub-step 1c),** one measures the similarities between said specific data Sd for each pair of subsets Sub within the social network Sntw (sub-step illustrated MEAS_Sd(Sub1, Sub2) in Fig. 3).

The pair composed of the first subset Sub1 and of the second subset Sub2 will be taken as a non-limitative example. Of course, this applies for any other pair of subsets within the social network Sntw.

In a non-limitative embodiment, the cosine similarity method well-known by the man skilled in the art is used. It is to be reminded that this method perform a measure of similarity between two vectors by measuring the cosine of the angle between them. The smaller the cosine of the angle between the two vectors is, the more similar said two vectors are.

Hence, the cosine similarity $\theta$ is such that similarity $= \cos \theta = \dfrac{A.B}{\|A\|\|B\|} =$

$$\dfrac{\sum_{i=1}^{n} Ai \times Bi}{\sqrt{\sum_{i=1}^{n}(A_i)^2}\sqrt{\sum_{i=1}^{n}(B_i)^2}}$$

with A a vector $V_{Sd1}$ of specific data Sd from the first subset Sub1 (and Ai the keywords and/or the semantic entities of said vector) and B a vector $VS_{d2}$ of specific data Sd from the second subset Sub2 (and Bi the keywords and/or the semantic entities of said vector) of the pair of subsets within the social network.

In other non-limitative examples, the measure may be based on semantic similarity metrics, for example using the semantic structure such as hierarchies of concepts in WordNet™, or statistical approaches, such as the normalized Google® distance.

It is to be noted that Wordnet™ is a lexical online database, which allows to organize words through different relationships. Thus, tree is a "kind of" plant, plant is a "hypernym" of tree, trunk "is part of" tree, etc. Similarity between two terms in Wordnet are thus obtained by a linear combination of the scores of the two terms according to the different relations (hyponym, meronym, troponym, etc.). Each individual score being obtained based on the length of the path between the two terms in Wordnet™ according to the considered relation.

It is to be noted that the normalized Google® distance NGD between two search terms x and y is

$$ NGD(x,y) = \frac{\max\{\log f(x), \log f(y)\} - \log f(x,y)}{\log M - \min\{\log f(x), \log f(y)\}} $$

where M is the total number of web pages searched by Google™; f(x) and f(y) are the number of hits for search terms x and y, respectively; and f(x, y) is the number of web pages on which both x and y occur.

If the two search terms x and y never occur together on the same web page, but do occur separately, the normalized Google distance between them is infinite. If both terms always occur together, their NGD is zero, or equivalent to the coefficient between x squared and y squared. When applied to the keywords and/or entities, x, and y by are the vectors $V_{Sd1i}$, $V_{Sd2j}$ of the pair of subsets Sub1 and Sub2 respectively.

When the description D of the subsets is taken into account as mentioned above, one measures the similarities between the specific data Sd for each pair of subsets Sub when said specific data Sd are coming from the subset description D. One may use the same similarities computation methods as described above applied on two vectors $V_{D1}$ and $V_{D2}$ with D1, the description of subset1 and D2 the description of subset2.

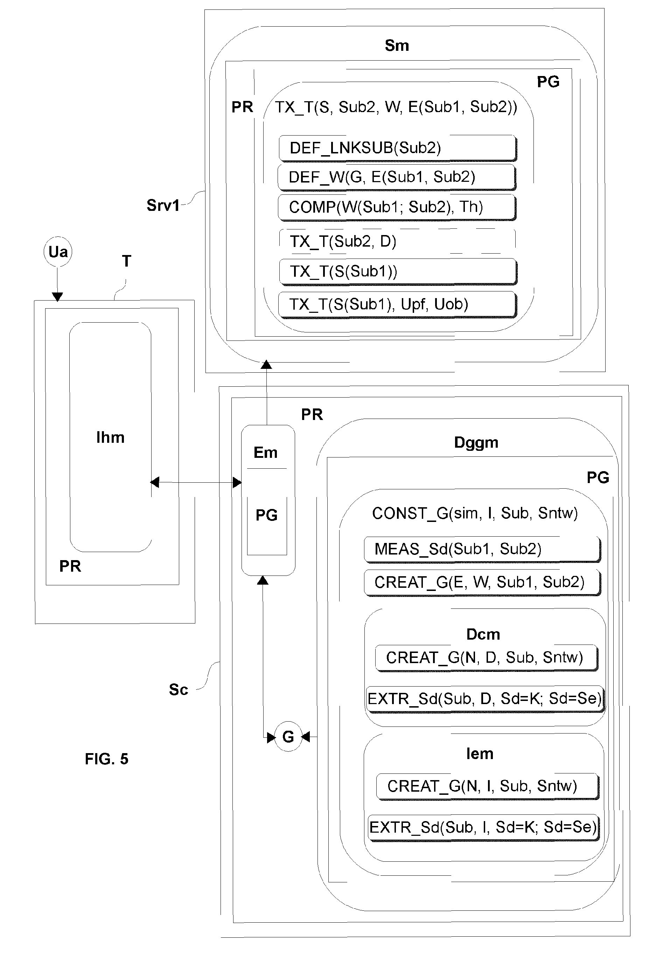

It is to be noted that for the purpose of sub-step 1a) and 1b) applied on interactions I, the graph generator Dggm comprises an interactions similarity evaluator module Iem which compares the social interactions (annotations, conversations etc.) that occurred within the two separate subsets Sub1 and Sub2 as mentioned above (illustrated CREAT_G(N, I, Sun, Sntw) and EXTR_Sd(Sub, I, Sd, =K ; Sd = Se) in Fig. 5) .

For the purpose of sub-step 1a) and 1b) applied on the description D, the graph generator Dggm comprises a community description comparator module Dcm which computes the description similarity of the two separate subsets Sub1 and Sub2 as mentioned above (illustrated CREAT_G(N, D, Sun, Sntw) and EXTR_Sd(Sub, D, Sd, =K ; Sd = Se) in Fig. 5).

**In a fourth sub-step 1d),** according to said measures, create an edge E within the graph G with an associated weight W for each pair of subsets Sub (sub-step illustrated CREAT_G(E, W, Sub1, Sub2) in Fig. 3).

In a non-limitative embodiment, when the description D of the subsets is taken into account as described above, the weight of the edge E within the graph G associated to each pair of subsets is updated accordingly.

Hence, in a non-limitative embodiment, the degree of proximity between two subsets, expressed by the weight W on the edge E, may be computed as a linear combination of similarities based 1) on the analysis of similarities of interactions in each community, and in a non-limitative embodiment 2) on the two social objects descriptions D such that: W(Sub1,Sub2) = a*simI(I)Sub1, {I}Sub2) +b*SimD (D(Sub1), D(Sub2)) Where:

- SimI is a similarity measure between interactions;
- {I}Sub1 and {I}Sub2 is the representation of the set of interactions respectively from Sub1 and Sub2 ;
- SimD is a similarity measure between descriptions D ;
- D(Sub1) and D(Sub2) the description of sub1 and sub2 respectively
- a and b are variable enabling to balance the weight of the similarity between the descriptions and the similarity between subset users' interactions. This balance is set up in an ad hoc manner by the administrator of the graph generator Dggm.

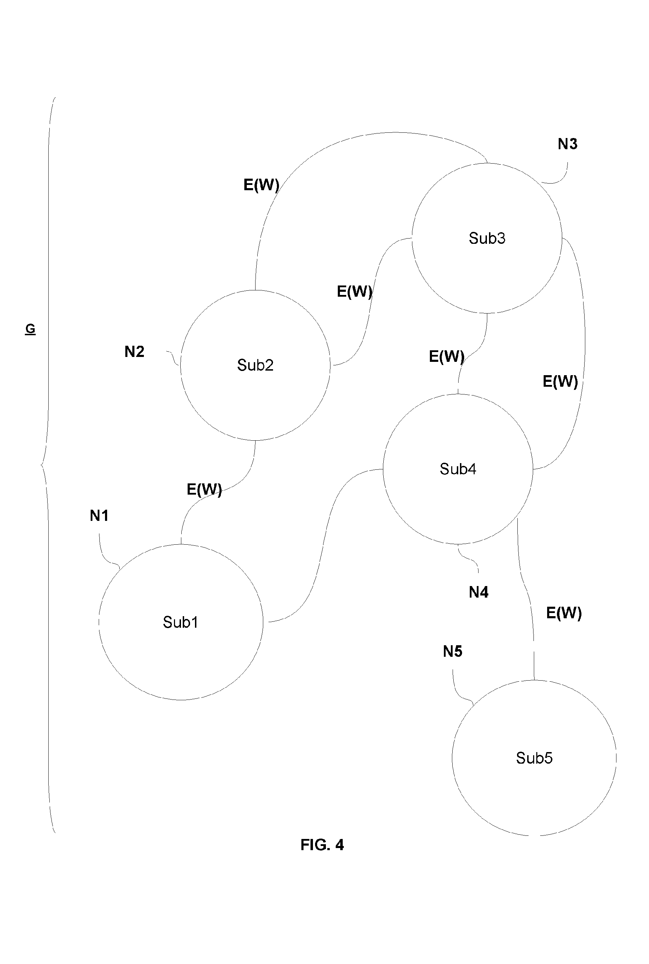

Such a dynamic graph G is illustrated in Fig. 4. As illustrated, a node N1 is assigned to the first subset Sub1 based on the book, and a node N2 is assigned to the second subset Sub2 based on the game. The edge E between the two nodes N1 and N2 has a weight W associated.

Hence, the following cases are taken in non-limitative examples to illustrate the attribution of the weight W between the first subset Sub1=subset-Book and the second subset sub2=subset-Game.

The subset-Game users reach the level of the game where the ongoing quest leads them to cross the famous Mines of Moria. But to successfully cross the Mines, they have to kill a powerful evil creature: a "Balrog". Users have to find a mean for that, which generates a lot of discussions.

The subset-Book users are discussing a hot topic specifically on the genesis of the creatures appearing in the book.

• Case 1

The topic in subset-Book is centered on the Nazgûl (or Dark Riders) that generates discussion activities, investigations etc...
The computed similarity weight between the two subsets is W=0.5.

• Case2

The topic in subset-Book is centered on the Balrog that also generates a lot of discussion activities, investigations etc...
The computed similarity weight between the two subsets is W=0.7.

• Case3

Consider that after all the exchanges between the members of the 2 subsets, the computed similarity coefficient W=0.9.

• Case4

Consider now that the current quest is finished. The "Balrog" has been killed and the game reaches a new level that leads the gamers to explore the vast plains of "Rohan" to find the magic horses and train them. This requires acquiring knowledge about the horses and the art of dressage. So new discussions on new topics and interests are beginning and lower the computed similarity between the two subsets to W=0.55, but a new subset appear in the set of communities proposed by the system as the subset-game's center of interest moves toward the "Horses" topic. Said new subset was registered in the social network Sntw, but was not proposed before due to the previous low similarity weight.

It is to be noted that the construction of the graph of subsets G is performed periodically according to the update of the social interactions I, because the evolution of the social interactions I within each community may induce significant changes in that community. So, weights associated to edges are recomputed based on the evolution of conversations within the community (W(Subi,Subj)≠ W+∆t(Subi,Subj)) They change overtime t. Moreover, whenever a new community Sub appears in the social network Sntw, the graph G is also updated. It is to be noted that a new community is usually registered within the social network Sntw by the manager of said social network.

When the dynamic graph G has been created as previously described, it is used to access subset services as following.

**In a second step 2)** illustrated TX_S(T, Sub2, W, E(Sub1, Sub2)), a set of services S of the first subset Sub1 to the second subset Sub2 is provided by said system Sys to said user terminal T, said set of services S being chosen according to the weight W of the edge E corresponding to said first subset Sub1 and said second subset Sub2.

Said step is performed by a service access manager Sm of the system Sys.

Consider a user Ua of the social network Sntw who is already fully part of several subsets Sub2, Sub3, Sub4 (illustrated in the Fig. 4), because he has permanent interests or friends in those subsets. However, the user Ua may want to expand this social experience, for example to find specific information the current subsets he is part of cannot provide. To do so, he uses an interface Ihm of said user terminal T which permits access to other subset Sub within the social network Sntw he is not part of and more particularly to the first subset Sub1.

Hence this step comprises the following sub-steps.

**In a first sub-step 2a)**, one determines from the dynamic graph of subsets G what are the other subsets (the user is not part of) which are linked to the second subset Sub2 in the case illustrated; for example the first subset Sub1 (illustrated DEF_LNKSUB(Sub2) in Fig. 3).

**In a second sub-step 2b)**, one determines from the dynamic graph of subsets G the weight W associated to the edge E connecting the first subset Sub1 and the second subset Sub2 (illustrated DEF_W(G, E(Sub1, Sub2) in Fig. 3).

**In a third sub-step 2c),** one determines from said weight W, which set of services S of the first subset Sub1 is to be granted to the user terminal T for the user to access. To do so, the weight W of the edge E corresponding to said first subset Sub1 and said second subset Sub2 is compared with a threshold level Th associated to each service S of the first subset Sub1, the one the user Ua is not a member of (illustrated COMP(W(Sub1; Sub2), Th) in Fig. 3). Therefore, the provision of a set of services comprises a sub-step of comparing the weight of the edge E corresponding to said first subset Sub1 and said second subset Sub2 with a threshold level Th associated to each service S of the first subset Sub1.

It is to be noted that said threshold level Th is set up in an initial step by the service access manager Sm for each service of each subset Sub of the social network Sntw, and more particularly for each service S of the first subset Sub1. A database TH_Db is therefore created for this purpose.

**In a fourth sub-step 2d)**, the granted set of services S of the first subset Sub1 is provided to the user terminal T (illustrated TX_T(S(Sub1)) in Fig. 3).

**If** one uses the examples previously given for the "Lord of the Ring":

- Case1 : W=0.5, only the "Activity Summary Following service" will be proposed to subset-Game.
- Case 2 : W=0.7

  - The system will propose to expose also (after the "Activity Summary Following service") to the subset-Game the Q&A service specialized in Tolkien Universe service ;
  - If some users of the game team ask information about Balrog on this Q&A (ex. "How to kill or escape a Balrog ?"), the Q&A service proposes experts from the subset-Book to answer (several exchanges are performed) ;
  - After a number of questions, the system proposes the "Sharing service" (experience about the game or photos of the game characters).

- Case 3 : W=0.9

  - The system will propose to grant the service "Meet the people" to some subset-Game users that have been detected geographically closed to members of the subset-Book (based on profile/context).
  - There is also a planned event: the film's release in preview for the "The Fellowship of the Ring" is proposed via the exposed "Event Booking service" to the subset-Game.
  - A new Subset-Book-2Towers will be also highlighted to the subset-game as a possible interesting community for the continuation of the adventure.

- Case 4: W=0.55

  - Services from the subset-Book "The Fellowship of the Ring" are hidden (the system proposes to the gamers to unsubscribe from specific services of subset-Book) as the similarity value W decreases between the subset Sub-Book and the subset Sub-Game;
  - Services around "Art of riding", "Circus School" etc... are available to the subset-Game community as the similarity value W overcomes a fixed threshold. Indeed, as explained previously the subset-game's center of interest moves toward the "Horses" topic.

Hence, the benefit for a member of the subset-Game is to extend the frontiers of said community to allow his member to:

- discover from subset-Book elements of the original history of the book by following comments/discussions (Increase Knowledge)
- find help from the discussion flow of subset-Book to solve a specific problem of a quest (Increase Knowledge)
- find help from a relevant person (or a group of persons) from subset-Book (an expert of the domain) (Increase Knowledge or social circle)
- discover other subsets connected to subset-Book
- participate to subset-Book (without explicit subscription) (Increase Participation)
- subscribe to subset-Book (become a member) (Increase Social Circle or Participation).

In a non-limitative embodiment, the provision of said set of services S is further filtered by a user profile Upf and/or a user parameters Uob set by the user of said user terminal T which has access to the second subset Sub2. Said user profile Upf and/or said user parameters Uob determine the user's objectives O (illustrated TX_T(S, Upf, Uob) in Fig. 3). Therefore, the set of services transmitted takes into account the user's objectives O.

In a non-limitative embodiment, the method further comprises the step of providing to the user terminal T the subsets Sub which are linked with the second subset Sub2, here the first subset Sub1, together with additional information such as the subset description D so that the user can filter out subsets he is not interested in (illustrated TX_T(Sub2, D) in Fig. 3).

In order to perform this second step, the following architecture is used in a non-limitative embodiment as illustrated in Fig. 2 .

The user terminal T comprises a cross-subset user interface Ihm, which is adapted to:

- collect the user's inputs, such as objectives O in terms of cross-community discovery experience (for example choice among a predefined set or deduced from the history of his activities i.e. "asking questions on Q&A systems" or "Web Searching on a recurrent topic" or "Consulting Wikipedia™");
- display of linked subsets he is not part of and of their associated filtered set of services according to the weight W described above, in a dynamic way according to the growth of the computed similarity weight ;
- show user access to selected subset services of subset he is not part of, potentially interesting the user at this time, according to the dynamic changes of his objectives O (user profile Upf or user parameters Uob). In a non-limitative example, one may proposes the user to join a discovered subset if similarity measure reaches a maximum weight W and user's goals are to increase his social circle or participation;
- hide user access to selected subset services when the computed similarity weight W falls below a certain threshold level;
- notify the user of a new service within a linked subset when the computed similarity weight W is higher than a certain threshold level.

The system Sys further comprises a cross-subset experience manager Em which is a central module that handles interactions with the user.
The service access manager Sm and the user terminal T are adapted to cooperate with said cross-subset experience manager Em.
Said cross-subset experience manager Em is adapted to perform the following functions.

- it takes as input the subset (or subsets) the user is part of: Sub2, Sub3, Sub4;
- it determines from the dynamic graph of subsets G which other subsets (the user is not part of) have links with Sub2, Sub3 and/or Sub4; for example subsets Sub1 and Sub5 represented on Fig. 1 and corresponding nodes N1 and N5 illustrated in Fig. 4.
- it provides back this information to the cross-subset user interface Ihm (together with additional information such as the subset description D extracted from a subset description database D_Db) so that the user can filter out subsets he is not interested in.
- it requests the service access manager Sm for services available to the user according to the proximity links of the two subsets. For example, subset Sub1 grants access to all users of subset Sub2 for its services S11 and S12 because of a certain strength of links (the weight W is superior to a certain threshold) between these subsets.

In a non-limitative embodiment, the cross-subset experience manager Em may refine at individual level the list of services to be proposed to the user by means of the user terminal T: a user goal manager Gm contains the user's objectives O (user profile Upf and/or user parameters Uob) in terms of cross-community discovery experience. Said objectives comprise the user profile Upf, or user parameters Uob, which include dynamic goals and static goals. For the static goals, the user goal manager is connected to a database SG_Db containing a static mapping static goals-services, which associate each possible objective to one or several subset common generic services S_g. Such goals may be "increase social circle" and such associated generic services may be "participating to event/travel booking".
This permits filtering among the set of services S (generic S_g and specific S_s as previously described) of the first subset Sub1 that are allowed to members of the second subset Sub2, the ones that match the user's objectives; for example service S11.
This information is passed back to the interface Ihm and presented to the user. The user can now have a partial, transparent access to some services of the first subset sub1.
Later on, because of the interactions that occurred within the first subset Sub1, the dynamic graph of communities has been updated, and the weight of the link between communities Sub1 and Sub2 has changed (increased for example). When the user connects again on the cross-subset user interface Ihm, he is notified that he has access to more services of Sub1 (for example he is able not only to follow a person, but may have access to a more valuable service such as a summary of interactions that occurred since the last time he connected to the system).
The similar process when the strength of the link W between communities Sub1 and Sub2 decreases. In that case, the access to Sub1's services will become looser and looser until it disappears if the link between the two communities becomes too loose.
Hence, the system Sys (via the dynamic communities graph generator Dggm) computes dynamically the graph of interlinked communities G which links represent the value of the similarity coefficient W also called weight.
The system (via the cross-community experience manager Em) is now capable to propose automatically to each connected users of a particular community, a set of appropriate services, matching the users' interests that were originally available only in a distant community.

Thus, access to these services will be performed gradually and dynamically according to the similarity found between the activities generated in the different communities.

As illustrated in Fig. 2 , the method M described is carried out by the system Sys.

Said system Sys comprises:

- the graph generator Dggm for constructing a graph G based on the measure of the similarities between the social interactions I of each pair of subsets Sub, said construction comprising :

  - creating of a node N for each subset Sub of the social network Sntw ;
  - extracting of specific data Sd associated to the social interactions I within each subset Sub ;
  - measuring the similarities between said specific data Sd for each pair of subsets Sub ;
  - according to said measures, creating an edge E within the graph G with an associated weight W for each pair of subsets Sub;

- a service access manager Sm for providing to said user terminal T, a set of services S of the first subset Sub1 to the second subset Sub2, said set of services S being chosen according to the weight W of the edge E corresponding to said first subset Sub1 and said second subset Sub2.

In a non-limitative embodiment, said system Sys further comprises the cross-community experience manager Em previously described.

In a non-limitative example, said system Sys is configured as a distributed architecture where:

- a server Srv1, Srv2 is dedicated to each subset Sub1, Sub2. Therefore a server Srv comprises the service access manager Sm module, the community interactions manager Cim module, the user manager Um module. Said server comprises the generic community services S_g, the specific community services S_s, the community description D, the social interactions I. Said server comprises the subset description database D_Db, the service threshold levels database TH_Db, the social interactions database I_Db and the users database U_Db.
  Of course, one may have a unique server Srv which is dedicated to all the subsets Sub1, Sub2, etc. of the social network.
- A central server Sc which comprises the dynamic communities graph generator Dggm (therefore the community description comparator Dcm, the interactions similarity evaluator Iem) and the cross-community experience manager module Em. Said central server Sc registered the different subsets Sub1, Sub2 etc., of the social network Stnw.

Fig. 5 illustrates the different modules Dcm, Iem, Sm of the system Sys and the functions executed by the different modules. The servers Srv1, Srv2 and Sc comprise unit processors PR (illustrated in Fig. 5) programmed accordingly to execute the above-described steps of the method M.

In another non-limitative embodiment, the system Sys is configured as a centralized architecture where a unique server Sc centralized all the modules for the subsets Sub that is to say Sm, Cim, Um, and the graph generator Dggm and the cross-community experience manager module Em.

The user terminal T comprises:

- the cross-community interface Ihm which is adapted to connect to:

  - the central server Sc to recover the information (description, filtered set of services) regarding the subsets linked to the subsets the user of said user terminal T is part of;
  - each subset server Sub2, Sub3, Sub4 to access the services he is authorized to access.

- the user goal manager Gm ;
- the mapping goal-services database SG_Db.

Said interface Ihm comprises components for the user to choose the subsets linked with the subsets he is part of and in which he has any kind of interests.

The user terminal T comprises a unit processor PR illustrated in Fig. 5 to execute the function above-described of the interface Ihm.

It is to be noted that a unit processor PR comprises one or a plurality of processors.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is to be understood that the present invention is not limited to the aforementioned embodiments and variations and modifications may be made without departing from the scope of the invention. In the respect, the following remarks are made.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Fig. 5, including any functional blocks labeled as "processors PR", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, application specific integrated circuit (ASIC), field programmable gate array (FPGA), read only memory (ROM) for storing software, and non volatile storage. Other hardware, conventional and/or custom, may also be included.

A person of skill in the art would readily recognize that steps of various above-described methods can be performed by programmed computers. Herein, some embodiments are also intended to cover program storage devices, e.g., digital data storage media, which are machine or computer readable and encode machine-executable. The program storage devices are therefore non transitory and may be, e.g., digital memories, magnetic storage media such as a magnetic disks and magnetic tapes, hard drives, or optically readable digital data storage media. The embodiments are also intended to cover computers programmed to perform said steps of the above-described method.

One or a plurality of computer program products PG as illustrated in Fig. 5 can be contained in the system Sys, said system Sys comprising a unit processor PR. A unit processor PR comprises one or a plurality of processors.

The computer program products PG comprise a set of instructions.

Thus, said set of instructions contained, for example, in a system memory, may cause the system Sys to carry out the different steps of the method M.

Therefore the invention presents the further following advantages.

- It permits a dynamic access to the services of another subset of which a user is not a member, to the whole members of the subset said user is member of, according to the similarity of the generated activity (e.g comments) ;
- It permits a flexible access to the services of another subset, said flexibility being performed by the gradual display of the services according to the similarity weight ;
- It avoids an un-subscription task to be performed when a service of the other subset doesn't correspond any more to the user ;
- It permits a dynamic computation of the set of services of the other subset over time and therefore it permits proposing a set of services which evolves over time ;
- It permits a display of the set of services of the other subset in real time (around a minute if wanted) as the information gathered to compute the similarities are far below the information gathered from all the user profiles of all the other subsets ;
- It permits interactions between users communities where users are not identifiable outside their own community. It permits to preserve their privacy. Interactions between users is however possible and scalable via the visibility level from one community to another based

on the interactions similarity between communities ;

- It reduces the number of calculations as only one vector per community is needed instead of one vector per user in the prior art ;
- It reduces the number of calculations as said calculations are decentralized when one has one server per community.

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

**Claims**

1. Method (M) for providing by means of a system (Sys) a set of services (S) of a first subset (Sub1) of a social network (Sntw) to a user terminal (T) which has access to a second subset (Sub2) of said social network (Sntw), said method comprising :

   - constructing by the system (Sys) a graph (G) based on the measure of the similarities between the social interactions (I) of each pair of subsets (Sub), said construction comprising :

      - creating of a node (N) for each subset (Sub) of the social network (Sntw) ;
      - extracting of specific data (Sd) associated to the social interactions (I) within each subset (Sub) ;
      - measuring the similarities between said specific data (Sd) for each pair of subsets (Sub) ;
      - according to said measures, creating an edge (E) within the graph (G) with an associated weight (W) for each pair of subsets (Sub);

   - providing by said system (Sys) to said user terminal (T), a set of services (S) of the first subset (Sub1) to the second subset (Sub2), said set of services (S) being chosen according to the weight (W) of the edge (E) corresponding to said first subset (Sub1) and said second subset (Sub2).

2. A method (M) as claimed in claim 1, wherein :

   - the specific data (Sd) is a keyword (K) or an entity (e) ;
   - the specific data (Sd) is the most relevant matching semantic entity (Se) found in a linked data graph (Ldg) from on a keyword (K) or from an entity (e) associated to the social interactions (I) of a subset (Sub).

3. A method (M) as claimed in claim 1 or in claim 2, wherein the construction of the graph (G) is performed periodically according to the update of the social interactions (I).

4. A method (M) in any one of the previous claims, wherein the construction of the graph (G) further comprises for each subset :

   - from the subset description (D), finding the corresponding specific data (Sd) ;
   - measuring the similarities between said specific data (Sd) for each pair of subsets (Sub) ;
   - according to said measure, update the weight (W) of the edge (E) within the graph (G) associated to each pair of subsets.

5. A method (M) as claimed in any one of the previous claims, wherein the provision of said set of services (S) is further filtered by a user profile (Upf) and/or a user parameters (Uob) set by a user of said user terminal (T) which has access to the first and the second subsets (Sub1, Sub2).

6. A method (M) as claimed in any one of the previous claims, wherein the provision of a set of services comprises a sub-step of comparing the weight (W) of the edge (E) corresponding to said first subset (Sub1) and said second subset (Sub2) with a threshold level (Th) associated to each service (S) of the first subset (Sub1).

7. A system (Sys) for providing a set of services (S) of a first subset (Sub1) of a social network (Sntw) to a user terminal (T) which has access to a second subset (sub2) of said social network (Sntw), said system (Sys) comprising:

   - a graph generator (Gm) for constructing a graph (G) based on the measure of the similarities between the social interactions (I) of each pair of subsets (Sub), said construction comprising :

      - creating of a node (N) for each subset (Sub) of the social network (Sntw) ;
      - extracting of specific data (Sd) associated to the social interactions (I) within each subset (Sub) ;
      - measuring the similarities between said specific data (Sd) for each pair of subsets (Sub) ;
      - according to said measures, creating an edge (E) within the graph (G) with an associated weight (W) for each pair of subsets (Sub);

- a service access manager (Sm) for providing to said user terminal (T), a set of services (S) of the first subset (Sub1) to the second subset (Sub2), said set of services (S) being chosen according to the weight (W) of the edge (E) corresponding to said first subset (Sub1) and said second subset (Sub2).

**8.** A system (Sys) as claimed in claim 6, wherein the graph generator (Gm) is further adapted to :

- from the subset description (D), finding the corresponding semantic entities (C) ;
- measuring the similarities between said semantic entities (C) of each pair of subsets (Sub) ;
- according to said measure, update the weight (W) of the edge (E) within the graph (G) associated to each pair of subsets.

**9.** A computer program product, comprising a set of instructions, which when loaded into said system (Sys), causes the system (Sys) to carry out the method for providing a set of services (S), as claimed in any one of the previous claims 1 to 6.

**10.** A non transitory program storage device comprising a computer program product (PG) comprising a set of instructions, which when loaded into said system (Sys), causes the system (Sys) to carry out the method for providing a set of services as claimed in any one of claims 1 to 6.

FIG. 1

FIG. 2

M

CONST_G(sim, I, Sub, Sntw)

CREAT_G(N, Sub, Sntw) — 1a

EXTR_Sd(Sub, Sd=K; Sd=Se) — 1b

MEAS_Sd(Sub1, Sub2) — 1c

CREAT_G(E, W, Sub1, Sub2) — 1d

1

TX_T(S, Sub2, W, E(Sub1, Sub2))

DEF_LNKSUB(Sub2) — 2a

DEF_W(G, E(Sub1, Sub2) — 2b

COMP(W(Sub1; Sub2), Th) — 2c

TX_T(Sub2, D)

TX_T(S(Sub1)) — 2d

TX_T(S(Sub1), Upf, Uob) — 2'd

2

FIG. 3

**FIG. 4**

**FIG. 5**

Europäisches
Patentamt

European
Patent Office

Office européen
des brevets

# EUROPEAN SEARCH REPORT

Application Number

EP 12 15 1626

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FANG WANG ET AL: "Overlapping Communities Generation for Online Support Forums", ADAPTIVE AND INTELLIGENT SYSTEMS, 2009. ICAIS '09. INTERNATIONAL CONFERENCE ON, IEEE, PISCATAWAY, NJ, USA, 24 September 2009 (2009-09-24), pages 175-180, XP031564455, ISBN: 978-0-7695-3827-3 * abstract * * page 176 * * page 179 - page 180 * ----- | 1-10 | INV. G06F17/30 |
| A | WO 2008/049208 A1 (XYSTAR TECHNOLOGIES INC [CA]; CRAIG TERRANCE MICHAEL [CA]) 2 May 2008 (2008-05-02) * paragraph [0004] - paragraph [0009] * * paragraph [0028] - paragraph [0029] * ----- | 1,7,9,10 | |
| A | TANJA FALKOWSKI ET AL: "Mining and Visualizing the Evolution of Subgroups in Social Networks", PROCEEDINGS OF THE IEEE/WIC/ACM INTERNATIONAL CONFERENCE ON WEB INTELLIGENCE IEEE COMPUT, SOC LOS ALAMITOS, CA, USA, 1 December 2006 (2006-12-01), pages 52-58, XP031008576, ISBN: 978-0-7695-2747-5 * paragraph [05.1] * * paragraph [05.3] * ----- | 1,7,9,10 | TECHNICAL FIELDS SEARCHED (IPC) G06F |

The present search report has been drawn up for all claims

| Place of search | Date of completion of the search | Examiner |
|---|---|---|
| The Hague | 1 August 2012 | Brichau, Gert |

EPO FORM 1503 03.82 (P04C01)

**ANNEX TO THE EUROPEAN SEARCH REPORT
ON EUROPEAN PATENT APPLICATION NO.**

EP 12 15 1626

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2012

| Patent document cited in search report | Publication date | Patent family member(s) | Publication date |
|---|---|---|---|
| WO 2008049208 A1 | 02-05-2008 | US 2008104079 A1<br>US 2008104172 A1<br>US 2008104495 A1<br>US 2008104679 A1<br>WO 2008049208 A1<br>WO 2008049233 A1<br>WO 2008049234 A1<br>WO 2008049236 A1 | 01-05-2008<br>01-05-2008<br>01-05-2008<br>01-05-2008<br>02-05-2008<br>02-05-2008<br>02-05-2008<br>02-05-2008 |

EPO FORM P0459

For more details about this annex : see Official Journal of the European Patent Office, No. 12/82

**EP 2 618 274 A1**

REFERENCES CITED IN THE DESCRIPTION

**Patent documents cited in the description**

- US 7853881 B